# EUROPEAN PATENT APPLICATION

(11) **EP 2 284 375 A1**
(43) Date of publication of application: **16.02.2011**
(21) Application number: 09167810.2
(22) Date of filing: 13.08.2009
(51) Int. Cl.: F02C 6/16, F01D 15/10

(54) **Enhanced gas turbine power output during under-frequency operation**

(71) Applicant: Siemens Aktiengesellschaft, 80333 München (DE)
(72) Inventor: Helmers, Lennard, 45481, Mülheim a.d. Ruhr (DE); Scholz, Christian, 45479, Mülheim an der Ruhr (DE)

(57) **Abstract**

Disclosed is a gas turbine power plant (1), comprising a compressor (2), a combustor (3), and a compressed-air line (6) interconnecting the compressor (2) and the combustor (3), wherein a pressure vessel (8) is connected to the compressed-air line (6) via a further compressed-air line (9). Further disclosed is a method for operating a gas turbine power plant (1).

## Description

### FIELD OF THE INVENTION

The invention relates to a method and a device for operating a gas turbine during distinct operating conditions such as under-frequency operation through discharging a pressure vessel that has been pressurized with compressor discharge air at nominal engine speed.

### BACKGROUND OF THE INVENTION

Electric grids powered by gas turbine based plants (in simple or combined cycle) are subject to mostly stringent requirements on operational characteristics at off-frequency, other than nominal grid frequency.

Large increases in the electrical power consumption demand placed upon an electrical power distribution grid will tend to reduce the electrical operational frequency of the grid, causing an "under-frequency" event. For example, a heavy or sudden electrical demand may cause a particular power distribution grid having a nominal operational frequency of 50 Hz to momentarily operate at 49 Hz. In conventional electrical power generation systems that utilize one or more heavy-duty industrial gas turbine for supplying electrical power to the grid, the physical speed of each turbine supplying power to the grid is synchronized to the electrical frequency of the grid. Unfortunately, as the physical speed of a gas turbine decreases with other things being equal, its power output correspondingly decreases. Consequently, during an under-frequency event, a gas turbine will tend to output a lower power. Just at low frequencies, requirements are most pronounced, which depending on local regulations (so-called Grid Codes), that must be satisfied in order for power equipment to be considered compliant, typically require that power production equipment have the capability to maintain load during under-frequency excursions or demand higher power output from the unit than possible with the unit operated at conserved temperatures under reduced operating frequencies.

Depending on local and/or project specific requirements a set of competing measures exist to increase compliance to Grid Code regulations. The following gas turbine specific measures are common:
A common practice is to increase the engine intake mass flow over the reference value, i.e. to reduce reference power output below engine capabilities ('de-rating').
Alternatively, additional water can be supplied to the engine intake to increase the mass flow and thus the power ((fast) wet compression).

Another common practice in response to a power grid under-frequency event (occurrence) is to increase the firing temperature of the gas turbine i.e. the peak temperatures in the engine temporarily and thus subject the hot-gas-path components to excessive thermal loads, to produce more power in an effort to maintain a predetermined level of output power. Unfortunately, such over-firing of the gas turbine may reduce the operational life expectancy of various hot gas path components within the turbine or may be introduced as derating of the reference operating point.

Increases in firing temperature increase power output at a given pressure ratio, which works adequately when the gas turbine does not approach any operating limits such as maximum pressure ratio capability or maximum inlet guide vane (IGV) position. A firing temperature increase is typically achieved by an increase of the fuel flow supplied to the combustor. All things otherwise equal, the increase in fuel flow results in a higher pressure at the turbine inlet, which in turn applies backpressure on the compressor. Eventually, adding more flow results in a compressor pressure limit, which is avoided by limiting the flow through the turbine through the diversion of compressor discharge air to inlet (inlet bleed heating) and/or reduction of fuel flow (and consequently firing temperature) and/or closing the IGVs. However, this method has limited capability to meet grid code requirements for cool ambient conditions and/or low Btu fuels (e.g. syngas) applications, due to operability limits encountered by the gas turbine compressor.

### SUMMARY OF THE INVENTION

An object of the invention is to provide a device and an operational method, which would improve the power output during distinct operations and result in improved grid code compliance during under-frequency operation.

This object is achieved by claim 1 and claim 8. The dependent claims describe advantageous developments and modifications of the invention.

An inventive gas turbine power plant comprises a compressor, a combustor, and a compressed-air line interconnecting the compressor and the combustor, wherein a pressure vessel is connected to the compressed-air line via a further compressed-air line.

At low frequency by nature of the thermodynamic gas turbine cycle the compressor exit pressure is reduced. If a pressure vessel is pressurized with compressor discharge air at nominal engine speed, the accumulated air will discharge upon reduction of compressor exit pressure.

It is advantageous when an air inlet of the pressure vessel is connected to the compressed air line via the further compressed-air line.

In accordance with another aspect of the invention a shut-off-valve is arranged for safety reasons in the further compressed-air line.

In accordance with a further aspect of the invention a boost pump is arranged in the further compressed-air line. The increased pressure level can be chosen to reduce the required vessel size. Once charged, there is no need to operate the boost pump continuously.

It is advantageous when an air outlet of the pressure vessel is connected to the compressed-air line via a vessel-discharge line. A discharge prior to the combustor maximizes the power increase at maintained temperature levels and thus thermal loads.

In an alternative arrangement an air outlet of the pressure vessel is connected to an exhaust-gas line of the combustor via a vessel-discharge line. When the vessel discharges downstream the combustor, the pressure drop over the combustor increases the pressure difference and drives the discharge flow.

Advantageously, a discharge valve is arranged in the vessel-discharge line to reduce the accumulated air reservoir smoothly.

In accordance with one aspect of the invention a method for operating a gas turbine power plant comprises extracting air from a compressor and directly charging a pressure vessel with compressor discharge air at nominal engine speed and discharging the air from the pressure vessel during under-frequency conditions.

The method further comprises discharging the pressure vessel prior to a combustor.

Alternatively, the method advantageously comprises discharging the pressure vessel downstream of a combustor.

The method further comprises increasing a pressure level in the pressure vessel by using a boost pump when feeding the discharge air to the pressure vessel.

With such a gas turbine power plant and such a method compressed air is used effectively to build up a reservoir, which serves as finite source of additional mass flow to temporarily balance grid frequency deviations.

The air is stored cheaply at ambient temperatures and requires additional work input for charging during only very limited periods.

The inherent drop of compressor discharge pressure is used and supports the self-adaptive discharge of the air reservoir.

The low temperature of the air reservoir allows use for comparatively cheap vessel materials.

This invention eliminates or relaxes the need for increased combustion temperatures and related increased thermal loads on the machinery to comply with Grid Code requirements.

### BRIEF DESCRIPTION OF THE DRAWINGS

The invention will now be further described with reference to the accompanying drawings in which:
- Figure 1: illustrates a typical gas turbine power plant in- corporating standard air, fuel, and combustion product flow,
- Figure 2: represents a gas turbine power plant with a pres- sure vessel that permits gas turbine operation during under-frequency operation through use of air extraction at normal engine speed,
- Figure 3: shows an alternative arrangement of the inventive gas turbine power plant with a boost pump ar- ranged in the compressed-air-line between com- pressor and pressure vessel, and
- Figure 4: shows an alternative compressed-air discharge path downstream of the combustor.

In the drawings like references identify like or equivalent parts.

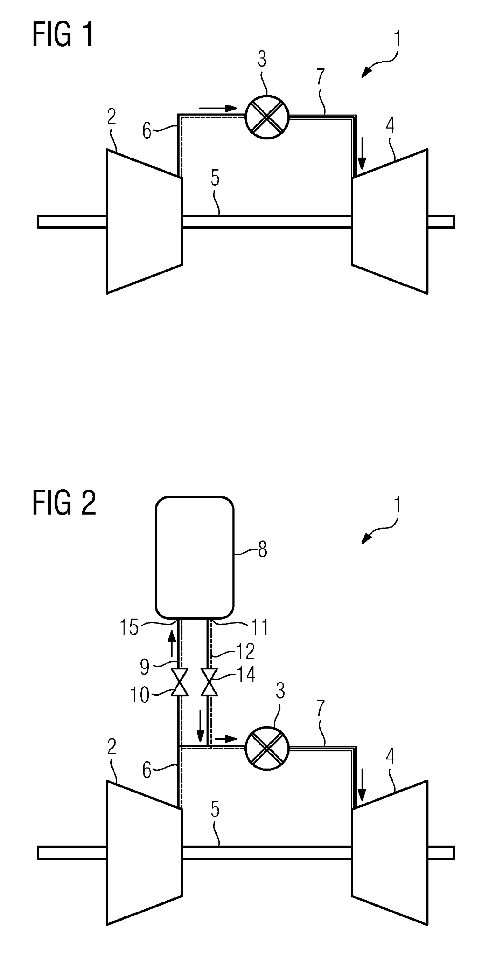

FIG. 1 illustrates a gas turbine power plant 1, including a compressor 2, a combustor 3, and a gas turbine 4. A rotor 5 couples the gas turbine 4 to the compressor 2. Air, under ambient conditions, enters the axial flow compressor 2. The compressed air enters via a compressed-air line 6 the combustor 3 where fuel is injected (not shown) and combustion occurs. The combustion mixture leaves the combustor 3 via an exhaust-gas line 7 and enters the gas turbine 4. In the gas turbine 4, energy of the hot gases is converted into work.

A portion of the work developed by the gas turbine 4 is used to drive the compressor 2 whereas the remainder is available for generating electric power with a generator (not shown).

The exhaust gas leaves the gas turbine 4 and flows for example in a combined cycle power plant to a heat recovery steam generator (not shown), providing energy to produce steam for driving a steam turbine.

FIG. 2 shows an inventive gas turbine power plant 1, where the air inlet 15 of a pressure vessel 8 is connected to the compressed-air line 6 via a further compressed-air line 9 and a shut-off valve 10 is arranged in the further compressed-air line 9. An air outlet 11 of the pressure vessel 8 is connected to the compressed-air line 6 via a vessel-discharge line 12. The pressure vessel 8 discharges prior to the combustor 3, maximising the power increase at maintained temperature levels and thus thermal loads.

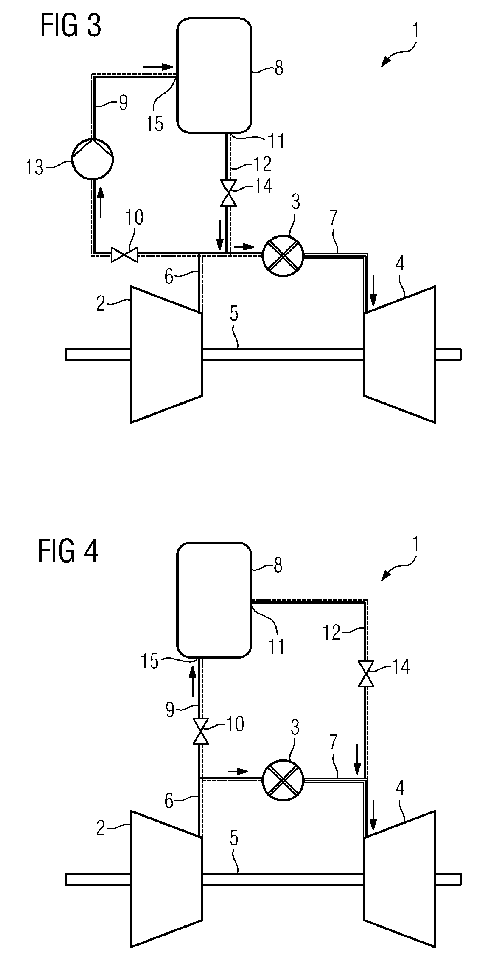

Figure 3 shows an alternative arrangement where the pressure vessel 8 is fed using a boost pump 13. The increased pressure level can be chosen to reduce the required pressure vessel size. Once charged, there is no need to operate the boost pump 13 continuously. A controlled discharge valve 14 is needed to reduce the accumulated air reservoir smoothly.

Figure 4 illustrates an alternative embodiment where the pressure vessel 8 discharges downstream of the combustor 3. The pressure drop over the combustor 3 increases the pressure difference and drives the discharge flow.

Not shown in the figures, but also imaginable, is the combination, where a boost pump 13 is used to increase the pressure level in the pressure vessel 8 and compressed air is discharged downstream of the combustor 3.

During under-frequency conditions, discharging the pressure vessel 8 pressurized at nominal engine speed will increase gas turbine power plant 1 output power to assist in meeting grid code requirements.

## Claims

1. A gas turbine power plant (1), comprising:
a compressor (2),
a combustor (3), and
a compressed-air line (6) interconnecting the compressor (2) and the combustor (3),
**characterized in that** a pressure vessel (8) is connected to the compressed-air line (6) via a further compressed-air line (9).

2. The gas turbine power plant (1) as claimed in claim 1, wherein an air inlet(15) of the pressure vessel (8) is connected to the compressed-air line (6) via the further compressed-air line (9).

3. The gas turbine power plant (1) as claimed in claim 1 or claim 2, wherein a shut-off valve (10) is arranged in the further compressed-air line (9).

4. The gas turbine power plant (1) as claimed in any of the preceding claims, wherein a boost pump (13) is arranged in the further compressed-air line (9).

5. The gas turbine power plant (1) as claimed in any of the preceding claims, wherein an air outlet (11) of the pressure vessel (8) is connected to the compressed-air line (6) via a vessel-discharge line (12).

6. The gas turbine power plant (1) as claimed in any of claims 1 to 4, wherein an air outlet (11) of the pressure vessel (8) is connected to an exhaust-gas line (7) of the combustor (3) via a vessel-discharge line (12).

7. The gas turbine power plant (1) as claimed in claim 5 or claim 6, wherein a discharge valve (14) is arranged in the vessel-discharge line (12).

8. A method for operating a gas turbine power plant (1), **characterized in that** air is extracted from a compressor (2) and a pressure vessel (8) is directly charged with compressor discharge air at nominal engine speed and the air is discharged from the pressure vessel (8) during under-frequency conditions.

9. The method as claimed in claim 8, wherein the pressure vessel (8) is discharged prior to a combustor (3).

10. The method as claimed in claim 8, wherein the pressure vessel (8) is discharged downstream of a combustor (3).

11. The method as claimed in claim 8, wherein a pressure level in the pressure vessel (8) is increased by using a boost pump (13) when feeding the discharge air to the pressure vessel (8).
